# EUROPEAN PATENT SPECIFICATION

(11) **EP 4 467 629 B1**
(45) Date of publication and mention of the grant of the patent: **17.09.2025**
(21) Application number: 23425026.4
(22) Date of filing: 26.05.2023
(51) Int. Cl.: C09K 9/00

(54) **THERMOCHROMIC MATERIAL COMPRISING A LAYERED PEROVSKITE, PREPARATION METHOD AND USES THEREOF**
THERMOCHROMES MATERIAL MIT EINEM GESCHICHTETEN PEROWSKIT, HERSTELLUNGSVERFAHREN UND VERWENDUNGEN DAVON
MATÉRIAU THERMOCHROMIQUE COMPRENANT UNE PÉROVSKITE EN COUCHES, SON PROCÉDÉ DE PRÉPARATION ET SES UTILISATIONS

(43) Date of publication of application: 27.11.2024
(73) Proprietor: Consiglio Nazionale delle Ricerche, 00185 Roma (IT)
(72) Inventor: Maiorano, Vincenzo, 00185 Roma (RM) (IT); De Marco, Luisa, 00185 Roma (RM) (IT); Cinquino, Marco, 00185 Roma (RM) (IT); Pugliese, Marco, 00185 Roma (RM) (IT); Giannuzzi, Roberto, 00185 Roma (RM) (IT); Maggiore, Antonio, 00185 Roma (RM) (IT); Prontera, Carmela Tania, 00185 Roma (RM) (IT); Taurino, Daniela, 00185 Roma (RM) (IT); Gigli, Giuseppe, 00185 Roma (RM) (IT)
(74) Representative: Iannone, Carlo Luigi

(56) References cited:
- ZHANG YANG ET AL: "Robust and Swiftly Reversible Thermochromic Behavior of a 2D Perovskite of (C 6 H 4 (CH 2 NH 3 ) 2 )(CH 3 NH 3 )[Pb 2 I 7 ] for Smart Window and Photovoltaic Smart Window Applications", APPLIED MATERIALS & INTERFACES, vol. 13, no. 10, 5 March 2021 (2021-03-05), US, pages 12042 - 12048, XP055965464, ISSN: 1944-8244, DOI: 10.1021/acsami.1c00163
- ZHANG YUMIAO ET AL: "Reversible Micro- and Nano- Phase Programming of Anthraquinone Thermochromism Using Blended Block Copolymers", LANGMUIR, vol. 31, no. 50, 11 December 2015 (2015-12-11), US, pages 13488 - 13493, XP093099354, ISSN: 0743-7463, DOI: 10.1021/acs.langmuir.5b03095

## Description

### Field of the invention

The present invention relates to a thermochromic material comprising a layered perovskite, its preparation method and uses thereof.

### Background of the invention

Thermochromism is the property of certain substances to change their light transmittance behaviour with temperature variation (temperature gradient). When the light transmittance pertains to the transmission of light of frequency within the visible spectrum, a colour change of the substances is perceived by a human eye. The colour change of a thermochromic material can be reversible or irreversible.

Thermochromism has been successfully exploited in a variety of applications, such as smart coatings, inks, textiles, conductive elastomers, energy-saving materials, temperature-indicating materials, thermodiagnostic applications (e.g. medical thermography), optical and electro-optical applications, security marking of documents, etc. Indeed, the deposition of thermochromic substances on a substrate provides it with new functionalities, such as temperature sensing or monitoring functionalities and the possibility of generating a warning based on colour change. For example, thermal-indicating , devices comprising a substrate onto which a thermochromic substances is applied, can be advantageously employed where conventional temperature measurement tools cannot be used, such as high-tension apparatus parts, continuous running gear, flying object, dangerous environment and environments where the human body cannot access. Thermochromic materials are also suitable where there is no need to measure the temperature very accurately, but it is sufficient to know a temperature range, for example as a visual safety warning (e.g. as abnormal heating of appliances during operation).

The thermochromic materials most commonly used in the art are based on cholesteric liquid crystals, leuco dyes, and inorganic pigments that can change colour when subjected to a temperature variation.

Liquid crystals are used in precision applications, as their responses can be engineered to accurate temperatures, but their colour range is limited by their principle of operation. Moreover, they require to be encapsulated within sealed chambers in order to properly work with consequent leakage issues.

Leuco dyes allow wider range of colours to be used, but their response temperatures are more difficult to set with accuracy.

Inorganic thermochromic pigments, such as vanadium oxide, are widely used in smart windows for building constructions. These windows can switch from a transparent state (for example, when natural lighting within the building is desired) to a coloured state (for example, when heating by solar radiation is problematic). The deposition of thin layers of inorganic pigments, however, is quite complicated and expensive.

Thermochromic materials of the state of the art have several drawbacks.

Liquid crystals, as disclosed in US6660345B2, require for example complex and expensive preparation process.

Thermochromic materials such as those disclosed in CN1086246A are resistant to elevated temperatures, but their colour change is irreversible.

CN1134969A discloses a reversible thermochromic temperature indicating material, which however cannot indicate temperatures below 120°C.

CN1618631A discloses a labelling paper capable of changing colour with a temperature change. The thermochromic composition used for its preparation, however, is characterized by dichromatism, a short working life and is not environmentally friendly as it incorporates Hg compounds.

Thermochromic materials based on leuco dyes, such as those disclosed in US4028118, are unsuitable for outdoor applications since they contain, as a colour-forming component, an electron-donating, chromatic organic compound which generally has low light-fastness and, therefore, they are readily subject to fading on exposure to sunlight.

Inorganic thermochromic pigments, such as those employed in smart windows in the form of thin film, despite exhibiting good performances, require highly expensive vacuum-based deposition techniques, such as physical vapor deposition.

Thermochromic materials based on hybrid organic-inorganic perovskites (HOIPs) are also known.

For example, US2018/252028A1 discloses an energy-harvesting chromogenic device in which a HOIP is used as reversible thermochromic material. The HOIP can have general formula ABX₃, ABX₄, A₂BX₆ or A'₂A"ₙ₋₁BₙX₃ₙ₊₁. The thermochromic material, for example CsPbI₂Br (ABX₃), may change colour from a visibly absorbing state (brown appearance at high temperature) to a visibly transparent state (colourless appearance at low temperature). The HOIP can be prepared in the form of a thin film by deposition on a substrate of a precursor solution containing precursor compounds followed by heat treatment at a relatively high temperature (e.g. 250 - 350 °C) to form a crystalline perovskite. According to US2018/252028A1 the observed colour change is brought about by the change of crystal system of the perovskite upon exposure to a temperature gradient.

US2017/089128A1 discloses an energy-harvesting chromogenic device in which the colour change of the HOIP is triggered by the presence/absence of intercalating species within the perovskite material, such that when a first condition is met, at least a portion of the intercalating species is associated with the switchable material and the switchable material is substantially transparent and substantially colourless, and when a second condition is met, at least a fraction of the portion of the intercalating species is transferred from the switchable material and the switchable material is substantially transparent and substantially coloured. The intercalating species can be, for example, a gas such as argon, moisture or methylamine. The switching between the two conditions can be induced by an energy input such as exposure to solar radiation or heat source.

Thermochromic materials for smart windows and photovoltaic applications are disclosed in ZHANG YANG ET AL: "Robust and Swiftly Reversible Thermochromic Behavior of a 2D Perovskite of (C6H4(CH2NH3)2) (CH3NH 3) [Pb2I7] for Smart Window and Photovoltaic Smart Window Applications", APPLIED MATERIALS & INTERFACES, vol. 13, no. 10, 5 March 2021 (2021-03-05), DOI: 10.1021/ acsami.1c00163.

In view of the above-described state of the art, there remains a need for alternative and/or improved thermochromic materials.

### Summary of the invention

Applicants have thus faced the problem of providing a thermochromic material capable of overcoming, or at least, ameliorate some of the drawbacks of the known thermochromic materials and devices set out above.

Particularly, a first scope of the present invention is to provide a thermochromic material in which the transition from a first colour condition to a second colour condition is fully reversible.

A second scope of the present invention is to provide a thermochromic material in which the transition temperature, the colour appearance below and above the transition temperature, as well as the speed of the colour transition can be tuned within certain temperature, speed ranges and colours variety.

A third scope of the present invention is to provide a thermochromic material that does not fade upon sunlight irradiation and thus is suitable for outdoor application.

A fourth scope of the present invention is to provide a thermochromic material and a method for its production, which are less expensive and easy to carry out than the materials and production methods of the prior art.

Applicants have now found that the above technical problems and others, that will more clearly result from the following disclosure, can be solved by a thermochromic material that comprises a layered (2D) perovskite and at least one poly(ethylene oxide)/poly(proylene oxide) block copolymer.

The thermochromic material is obtained by heat treating a liquid precursor composition comprising a mixture of precursor compounds capable of reacting to form a layered perovskite, the liquid precursor composition further containing at least one poly(ethylene oxide)/poly(proylene oxide) block copolymer.

It has been surprisingly found that combining the aforementioned poly(ethylene oxide)/poly(proylene oxide) block copolymer with a precursor solution of a layered perovskite yields, after heat treatment, a final solid or gel-like solid material having fully reversible thermochromic properties.

Moreover, the thermochromic properties of the final material can be easily tuned, for example by varying the chemical composition of the layered perovskite, the mass ratio of the block copolymer with respect to the precursor compounds of the perovskite material or by varying the chemical composition of the copolymer (e.g. ratio of ethylene oxide to proylene oxide and molecular weight). Particularly, varying the aforementioned parameters, singly or in combination, allows to modulate one or more of the following features: the colour appearance, namely the light transmittance spectrum of the material in the visible range of frequencies (but also in the UV and IR range); the colour transition temperature, namely the temperature at which the colour appearance of the material switches from a first colour condition to a second colour condition; and the speed of the colour transition.

Advantageously, the colour change occurring upon exposure of the thermochromic material to a temperature gradient is fully reversible, that is the thermochromic material reversibly changes colour from a first colour state to a second colour state when heated from ambient temperature to a higher temperature, e.g. within the range 50°C-150°C, and changes from the second colour state to the first colour state when cooled down to ambient temperature. To the aims of the present description, a colour state or colour condition includes a colourless state or colourless condition.

Importantly, the speed of the colour transition may be tuned to a desired value by changing the chemical composition of the thermochromic material. For example, the colour transition may be tuned so as to occur very quickly, i.e. in the order of a few seconds, for example from 1 to 15 seconds, or within a period of a few of minutes, for example from 1 to 10 minutes.

Without wishing to be bound to any theory, it is believed that the observed reversible thermochromic behaviour is brought about by a change in the mobility of the block copolymer chains upon exposure to a temperature gradient, which change in turn alters the spatial arrangement of the atoms within the crystalline structure of the layered perovskite, for instance by modifying the distance between the atoms of the same octahedral inorganic layer or of two adjacent layers.

A further advantage of the thermochromic material of the present invention is that it can be prepared starting from a precursor solution that, at ambient temperature, is in the form of a liquid having a viscosity such that it can be easily applied on a substrate using conventional deposition techniques, such as the techniques for the deposition of inks on small as well large area substrates (e.g. screen printing, inkjet printing, and roll to roll, etc.). An important advantageous is that the deposition can be carried out at ambient temperature, ambient pressure and in the presence of air. Moreover, the viscosity of the thermochromic composition is such that it can be used also in sealed devices without leading to the leakage problems observed for the thermochromic devices of the prior art.

Another important advantage of the thermochromic material of the present invention is that it is not air-sensitive and therefore can be favourably used to manufacture thermochromic articles suitable for outdoor applications.

In a first aspect, therefore, the present invention refers to a thermochromic material comprising:
(i) at least one layered perovskite of formula (I)

   A₂A'ₙ₋₁BₙX₃ₙ₊₁ (I)

   or formula (II)

   A"A'ₙ₋₁BₙX₃ₙ₊₁ (II),

   wherein:
   - A and A' are monovalent cations,
   - A" is a divalent cation,
   - A and A" are different from A',
   - B is a divalent cation different from A, A' and A",
   - X is a monovalent anion,
   - n is an integer number equal to or higher than 1 and equal to or lower than 60;
(ii) at least one poly(ethylene oxide)/poly(propylene oxide) block copolymer.

In a second aspect, the present invention refers to the use of a composition comprising:
(i) at least one layered perovskite of formula (I) or (II) as previously defined, and
(ii) at least one poly(ethylene oxide)/poly(propylene oxide) block copolymer,
as thermochromic material.

In a third aspect, the present invention refers to a thermochromic device comprising a substrate onto which a thermochromic material according to the first aspect is applied.

In a fourth aspect, the present invention refers to a method for manufacturing a thermochromic device comprising:
- providing a liquid precursor composition comprising:
   (i) a mixture of precursor compounds capable of reacting to form a layered perovskite having the above described general formula (I) or formula (II),
   (ii) at least one poly(ethylene oxide)/poly(propylene oxide) block copolymer,
   (iii) at least one organic solvent;
- applying the liquid precursor composition on at least one surface of a substrate to obtain a coated substrate;
- heating the coated substrate to evaporate the solvent and form a thermochromic device.

In a fifth aspect, the present invention refers to a liquid precursor composition comprising:
(i) a mixture of precursor compounds capable of reacting to form a layered perovskite having the above described general formula (I) or formula (II),
(ii) at least one poly(ethylene oxide)/poly(propylene oxide) block copolymer,
(iii) at least one organic solvent.

### List of the figures

The invention will be described herein with reference to the following figures:
- Figure 1, which is a schematic illustration of a layered perovskite material having general formula (ButA)₂(MA)ₙ₋₁BₙX₃ₙ₊₁ (with n = 1, 2, and 3), where B is a divalent metal ion (e.g. Pb²⁺), X is a monovalent anion (e.g. I⁻), ButA is butylammonium ion and MetA is methylammonium ion;
- Figures 2(a) - 2(c), which reports the UV/Vis transmittance spectra of the thermochromic materials of Examples 1 to 3;
- Figure 3, which reports the transmittance spectrum of the layered perovskite material of Example 2 in the absence of poly(ethylene oxide)/poly(propylene oxide) block copolymer.

### Detailed description of the invention

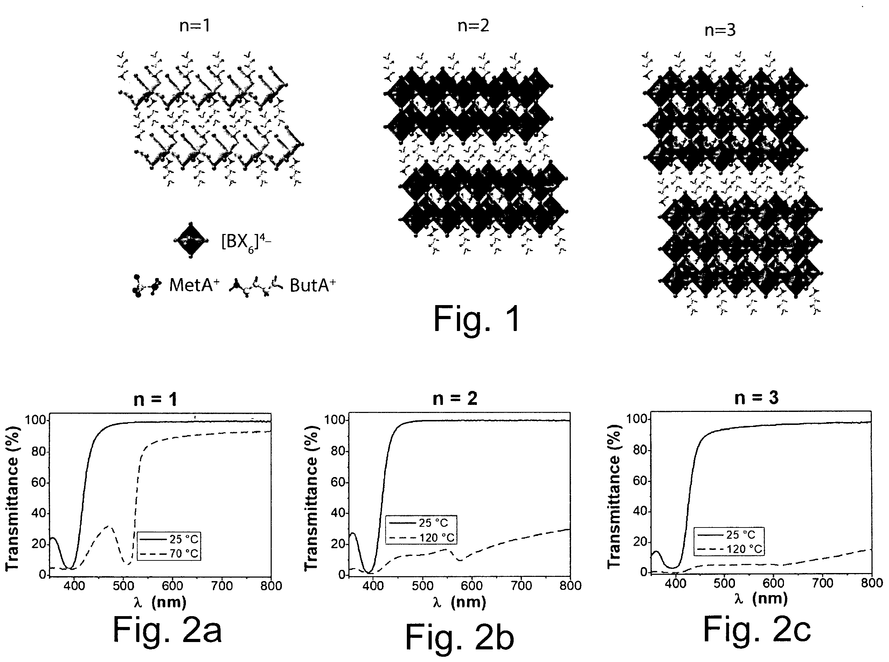

3D perovskite having general formula ABX₃, where A is a small cation, B is a divalent metallic cation (e.g. Pb²⁺, Sn²⁺ or Ge²⁺) and X is a halide anion, adopts an extended cubic structure consisting of cornersharing [BX₆]⁴⁻ octahedrons. Layered perovskites, also known as 2D perovskites, have general formula (I) A₂A'ₙ₋₁BₙX₃ₙ₊₁ or formula (II) A"A'ₙ₋₁BₙX₃ₙ₊₁ and can be seen as the dimensional reduction of the 3D lattice of the aforementioned perovskite of formula ABX₃, where A' is a monovalent cation (i.e. butylammonium ion as in Fig. 1(a)-(c)) and A" is a divalent cation that intercalate between the inorganic A'ₙ₋₁BₙX₃ₙ₊₁ 2D sheets, and n is the number of octrahedral layers per inorganic sheet, namely the thickness of the inorganic layers. Figure 1 illustrates an example of layered perovskites of formula (I) having n = 1, 2 or 3, each perovskite containing two inorganic sheets, wherein butylammonium ions intercalate between the inorganic sheets.

In the layered perovskite of formula (I) and formula (II) according to the present invention, A and A" represent a cation having a larger dimension than A'.

In the layered perovskite formula (I), the cation A is preferably a monovalent organic cation.

In one embodiment, the monovalent organic cation A is an organic ammonium cation, that is a cation comprising one ammonium group bound to an organic moiety.

Preferably, the organic moiety of the organic ammonium cation is an aliphatic, aromatic, heteroaromatic, heterocyclic or arylalkyl moiety, the organic moiety being possibly substituted with one or more from: halide (e.g. F, Cl, Br and I), NO₂, NH₂, C₁-C₈ alkyl, amino (C₁-C₈) alkyl, ethoxy group and combinations thereof.

The ammonium group of the monovalent organic ammonium cation may be a primary, secondary, tertiary or quaternary ammonium. Preferably, the ammonium group is a primary ammonium group.

Non limiting examples of aliphatic ammonium cation are C₃-C₂₀ alkyl ammonium cations, such as: butylammonium cation, penthylammonium cation, hexylammonium cation, heptylammonium cation, octylammonium cation, dodecylammonium cation.

Non limiting examples of unsubstituted or substituted aromatic ammonium cations are aryl ammonium cations, such as phenylammonium and naphtylammonium.

Non limiting examples of unsubstituted or substituted arylalkylammonium cations are benzylammonium and phenethylammonium (e.g. 4-fluorophenethylammonium).

Non limiting examples of unsubstituted or substituted heteroaryl ammonium cations are: pyridinium cations, such as (C₁-C₈)alkyl pyridinium (e.g. 4-(methyl)pyridinium).

Non limiting examples of unsubstituted or substituted heterocyclic ammonium cations are pyrrolidinium cation and piperidinium cation, such as (C₁-C₈)alkyl piperidinium (e.g. 4-(methyl)piperidinium).

The layered perovskite of formula (I) may also include a mixture of different cations as cation A.

In the layered perovskite formula (II), the cation A" is preferably a divalent organic cation.

In one embodiment, the cation A" is a divalent organic cation, preferably a divalent diammonium organic cation, that is a cation having two positive charges and comprising two ammonium groups bounded to an organic moiety.

The organic moiety of the divalent diammonium organic cation may be an aliphatic, aromatic, heteroaromatic, heterocyclic or arylalkyl moiety, each of these moieties being possibly substituted with one or more from: halide (e.g. F, Cl, Br and I), NO₂, NH₂, C₁-C₈ alkyl, amino (C₁-C₈)alkyl, ethoxy group and combinations thereof.

The two ammonium groups of the divalent organic ammonium cation may be, independently, a primary, secondary, tertiary or quaternary ammonium. Preferably, both ammonium groups are primary ammonium groups.

Non limiting examples of diammonium organic cation are C₃-C₂₀ alkyl diammonium cations, unsubstituted or substituted C₆-C₂₀ aryl diammonium cation, unsubstituted or substituted C₆-C₂₀ heteroaryl diammonium cation, unsubstituted or substituted C₆-C₂₀ heterocyclic diammonium cation and combinations thereof.

Non limiting examples of aryl diammonium cations are: p-phenylenediammonium and m-phenylenediammonium.

Non limiting examples of heterocyclyl diammonium cations are: amino(C₁-C₈)alkyl piperidinium (e.g. 4-(aminomethyl) piperidinium).

Non limiting examples of heteroaryl diammonium cations are: amino(C₁-C₈)alkyl pyridinium (e.g. 4-(aminomethyl)pydinium)) and 2,5-thiophenedimethylammonium.

In one embodiment, the cation A" is selected from the diammonium ions having the following general formula (III) or (IV):

R^{I}R^{II}N⁺-(CH₂)ₙ-N+R^{III}R^{IV} (III)

wherein:
- R^{I}, R^{II}, R^{III} and R^{IV}, equal or different, are selected from: hydrogen atom and C₁-C₄ alkyl group, such as methyl, ethyl, propyl or butyl;
- n is an integer number from 1 to 20, preferably 2 to 12;

   R^{I}R^{II}N⁺-(CH₂)ₙO(CH₂)O(CH₂)ₘ-N⁺R^{III}R^{IV} (IV)

   wherein
   - R^{I}, R^{II}, R^{III} and R^{IV}, equal or different, are selected from: hydrogen atom and C₁-C₄ alkyl group, such as methyl, ethyl, propyl or butyl;
   - n and m, equal or different, are an integer number from 1 to 10, preferably 2 to 6.

Non-limiting examples of compound of formula (III) are: hexamethylenediammonium, N,N-dimethylethylenediammonium and N,N-Dimethyl-1,3-propanediammonium.

Non-limiting examples of compound of formula (IV) are: 4,9-dioxa-1,12-dodecanediammonium and 2,2'-(ethylenedioxy)bis(ethylammonium).

The layered perovskite of formula (II) may also include a mixture of different cations as cation A".

In the above formulae (I) and (II), the cation A' may be selected from monovalent organic cations, monovalent inorganic cation and combinations thereof.

Preferably, cation A' is selected from: methylammonium, ethylammonium, formamidinium, acetamidinium, guanidinium, alkali metal cation (e.g. Li⁺, Na⁺, K⁺, Cs⁺, Rb⁺) and combinations thereof.

Preferably, the divalent cation B is selected from: Pb²⁺, Sn²⁺, Ge²⁺ and divalent transition metal, such as Ni²⁺, Cu²⁺ or Zn²⁺.

The layered perovskite of formulae (I) or (II) may include a mixture of cations B having different valence states such that the overall perovskite is charge balanced.

In one embodiment, cation B is selected from Pb²⁺, Sn²⁺ and combination thereof.

Preferably, in the above formula (I) the monovalent anion X is a halide, such as fluorine, chloride, bromide, iodide, or a non-halide anion, such as SCN⁻. Preferably, the anion X is a halide, more preferably bromide and iodide.

In some cases, the layered perovskite of formula (I) may include more than one anion X, for example pairs of halides, such as chlorine and iodine, bromine and iodine.

In one embodiment, the thermochromic material comprises a layered perovskite of formula (I) wherein:
A is C₃-C₂₀ alkylammonium ion, preferably C₄-C₈ alkylammonium ion;
A' is C₁-C₂ alkylammonium ion, preferably methylammonium ion;
B is a cation selected from Pb²⁺ or Sn²⁺;
X is chloride, bromide or iodide.

In one embodiment, the thermochromic material comprises a layered perovskite of formula (II) wherein:
A" is N,N-Dimethyl-1,3-propanediammonium;
A' is C₁-C₂ alkylammonium ion, preferably methylammonium ion;
B is a cation selected from Pb²⁺ or Sn²⁺;
X is chloride, bromide or iodide.

In formula (I) and (II), n can be an integer number equal to 1 or higher and equal to 60 or lower. Preferably, n is within the range 1-40, more preferably 1-20, even more preferably 1 - 10. In one embodiment, n is equal to: 1, 2, 3, 4 or 5; more preferably n is equal to 1, 2 or 3.

As it is well-known to a person skilled in the art, layered perovskites can be prepared in which all, or substantially all, the octahedral inorganic layers have the same thickness, that is the same value of n in formula (I) or (II). However, layered perovskites can also be prepared, in which octahedral inorganic layers having different values of n coexist (also called multiphase layered perovskites).

In some cases, the perovskite material of the present invention may comprise a combination of 2D perovskite phase and a 3D perovskite phase (2D/3D perovskites).

In general terms, the value of n in the layered perovskite can be predetermined by varying the proportion of the precursor compounds in the liquid precursor composition.

For the scope of the present invention, the coexistence of perovskite layers having different values of n within the same thermochromic material is advantageous as it allows an improved tunability of the light transmittance spectrum of the material in the visible range as well in the UV and IR range and, hence, improved tunability of its colour appearance and colour change properties as well as other properties of the material.

In order to render the layered perovskite a thermochromic material, according to the present invention the perovskite precursors are combined with at least one copolymer poly(ethylene oxide)/poly(propylene oxide).

This copolymer is a triblock copolymer composed of a central hydrophobic chain of polyoxypropylene (poly (propylene oxide)) flanked by two hydrophilic chains of polyoxyethylene (poly(ethylene oxide)). This block copolymer is also known to the skilled person as PEG-PPG-PEG.

Preferably, the block copolymer poly(ethylene oxide)/poly(propylene oxide) has the following general formula (II) 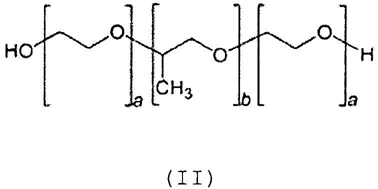 wherein a is within the range 2 - 130 and b within the range 15 - 67.

Preferably, the block copolymer has an ethylene oxide content within the range 5% - 50% by weight referred to the weight of the block copolymer, preferably within the range 10% - 40% by weight.

Preferably, the block copolymer is present in the thermochromic material in an amount within the range of from 40% to 99% by weight referred to the weight of the thermochromic material, preferably within the range of from 70% to 85% by weight.

In one preferred embodiment, the block copolymer has number averaged molecular weight "Mₙ" within the range 1.100 - 8.000 Da, more preferably 2.000 - 5.000 Da. As described herein, the weight average Mₙ is meant as determined by Gel Permeation Chromatography (GPC), using polystyrene standard.

The block copolymer can be synthesized according to methods well-known to the person skilled in the art. The block copolymer is also commercially available, for example it is marketed with the trade names Pluronic^{®} (BASF) and Synperonic (Croda).

The thermochromic material according to the present invention exhibit reversible thermochromism, that is the material reversibly changes colour (or light transmittance spectrum) upon exposure to a temperature gradient.

It has been observed that the initial colour of the perovskite material at ambient temperature (i.e. 25 °C) and its colour appearance after exposure at the transition temperature or above the transition temperature depend on the composition of the layered perovskite material. For example, for a given system of precursor compounds, the initial colour state (hereinafter also indicated as "low-temperature colour") may be colourless, independently of the thickness of the layered perovskite, that is the value of n in formula (I). For the same system of precursor compounds the transition temperature and/or the final colour state (hereinafter also indicated as "high-temperature colour") may vary with the value of n.

For instance, as reported in the examples included in the present disclosure, for a given system of precursor compounds it has been observed that at ambient temperature the thermochromic material is colourless, whereas:
- for n = 1 the high temperature color is yellow and the transition temperature is around 70°C;
- for n = 2 the high temperature color is reddish and the transition temperature is around 120°C,
- for n = 3 the high temperature color is dark brown and the transition temperature is around 120°C.

As described herein, the transition temperature is the temperature at which a human eye starts to perceive the change of colour of the perovskite material.

The thermochromic properties of the material of the present invention are observed both in air and under vacuum, and are not substantially affected by the environmental conditions. The thermochromic material of the present invention is thus suitable for being used in outdoor application and its functioning does not require encapsulation, although encapsulation can be adopted if desired.

The extent of the colour transition (or transmittance modulation) can be measured by comparing the value of the Light Transmittance percentage (T%) of the material below and at the colour transition temperature. The extent of the colour transition, which can be indicated as ΔT(%)ₘₐₓ, is herein meant as the difference between the T% value measured at a temperature below the colour transition temperature (e.g. 25°C) and the T% value measured at the colour transition temperature (e.g. 120°C), when the two T% values are both measured at the wavelength in which such difference is the greatest, said wavelength being within the range 400 - 800 nm.

The thermochromic material of the present invention preferably has a ΔT(%)ₘₐₓ of about 80% or higher, preferably of about 90% or higher.

The ΔT(%)ₘₐₓ preferably occurs at a wavelength within the range of from 500 nm to 650 nm.

Generally, the transition from an initial color state to a final colour state occurs very rapidly, namely within few seconds, e.g. 1 to 15 seconds, both when the perovskite material is heated up and when the perovskite material is cooled down. The speed of the colour transition, however, can also be within the range of 1 to 20 minutes.

By varying the chemical composition of the layered perovskite material of the present invention, either qualitatively or quantitatively or both, the thermocromic properties of the perovskite material can be easily tuned according to the requirements of the field of application. The thermocromic properties may also be adjusted by varying the chemical composition of the copolymer and the mass ratio of the copolymer with respect to the layered perovskite material.

The thermochromic material of the present invention can be prepared using the techniques known in the art and customarily adopted for the preparation of layered perovskites. Preferably, the thermochromic material of the present invention are prepared by heat treating (i.e. annealing) of the liquid precursor composition, for example after its deposition on a substrate.

The liquid precursor composition comprises a mixture of precursor compounds, which are dissolved in at least one organic solvent (precursor solution). As used herein, a mixture of precursor compounds is meant as a mixture of compounds that are capable of reacting upon heat treatment that makes the solvent to evaporate with formation of a layered perovskite of formula (I).

The type of precursor compounds and their proportions in the perovskite precursor composition to be used can be determined by the person skilled in the art on the basis of his technical knowledge and/or can be selected among those customarily used in the state of the art for the preparation of layered perovskite from liquid solutions.

In one embodiment, for example when n = 1, the mixture of precursor compounds comprises at least a mixture of the compounds BX₂ and AX or at least a mixture of the compounds BX₂ and A"X₂, wherein A, A", B and X have the meaning previously defined.

In one embodiment, for example when n > 1, the mixture of precursor compounds comprises at least a mixture of the compounds BX₂, AX and A'X or at least a mixture of the compounds BX₂, AX and A"X₂, wherein A, A', B and X have the meaning previously defined.

In one embodiment, the mixture of precursor compounds (i) is a mixture of precursor compounds of a layered perovskite of formula A₂BX₄ (i.e. a perovskite of formula (I) in which n = 1) comprising at least one BX₂ compound, at least one AX compound in a molar ratio AX:BX₂ within the range of from 1.8:1 to 2.2:1, preferably about 2:1 and wherein A, B and X have the meaning previously defined.

In one embodiment, the mixture of precursor compounds (i) is a mixture of precursor compounds of a layered perovskite of formula A"BX₄ (i.e. a perovskite of formula (II) in which n = 1) comprising at least one BX₂ compound, at least one A"X₂ compound in a molar ratio A"X₂:BX₂ within the range of from 0.8:1 to 1.2:1, preferably about 1:1 and wherein A", B and X have the meaning previously defined.

In another embodiment, the mixture of precursor compounds (i) is a mixture of precursor compounds of a layered perovskite of formula (I) in which n is an integer number equal to or higher than 2 and equal to or lower than 60, preferably within the range 2 - 30, more preferably 2-10, even more preferably n = 2, 3, 4 or 5, which comprises:
- at least one BX₂ compound;
- at least one AX compound;
- at least one A'X compound;
wherein A, A', B and X have the meaning previously defined,
- the molar ratio A'X:AX:BX₂ being within the range of from 0.2:0.1:1 to 0.9:1.1:1, preferably 0.5:0.4:1 to 0.8:1:1.

In certain embodiments, the molar ratio A'X:AX:BX₂ to prepare layered perovskite of formula (I) may be the following:
for n=2, A'X:AX:BX₂ is 0.5:1:1;
for n=3 A'X:AX:BX₂ is 0.66:0.66:1;
for n=4 A'X:AX:BX₂ is 0.75:0.5:1;
for n=5 A'X:AX:BX₂ is 0.8:0.4:1.

In another embodiment, the mixture of precursor compounds (i) is a mixture of precursor compounds of a layered perovskite of formula (II) in which n is an integer number equal to or higher than 2 and equal to or lower than 60, preferably within the range 2 - 30, more preferably 2-10, even more preferably n = 2, 3, 4 or 5, which comprises:
- at least one BX₂ compound;
- at least one A"X₂ compound;
- at least one A'X compound;
wherein A', A", B and X have the meaning previously defined,
- the molar ratio A'X:AX₂:BX₂ being within the range of from 0.2:0.1:1 to 0.9:0.7:1, preferably 0.5:0.2:1 to 0.8:0.5:1.

In certain embodiments, the molar ratio A'X:AX₂:BX₂ to prepare layered perovskite of formula (II) may be the following:
for n=2, A'X:AX₂:BX₂ is 0.5:0.5:1;
for n=3 A'X:AX₂:BX₂ is 0.66:0.33:1;
for n=4 A'X:AX₂:BX₂ is 0.75:0.25:1;
for n=5 A'X:AX₂:BX₂ is 0.8:0.2:1.

The precursor composition according to the present invention also comprises at least one organic solvent capable of dissolving the perovskite precursor compounds to form a precursor solution.

Preferably, the organic solvent is a polar aprotic solvent, for example selected from: dimethylformamide (DMF), dimethyl sulfoxide (DMSO), γ-butyrolactone (GBL), N-methyl-2-pyrrolidone (NMP), dimethylacetamide (DMAc), tetrahydrofuran (THF), acetonitrile and mixtures thereof.

In one embodiment, the organic solvent is a mixture of THF, DMF and DMSO.

Preferably, the liquid precursor composition comprises the mixture of precursor compounds and the block copolymer in the following ratios:
1% - 60%, preferably 15% - 30%, of the mixture of precursor compounds,
40% - 99%, preferably 70% - 85%, of the poly(ethylene oxide)/poly(propylene oxide) block copolymer,
the above percentages being referred to the total weight of the mixture of precursor compounds and the block copolymer.

The at least one organic solvent is present in the liquid precursor composition in a concentration sufficient to dissolve the perovskite precursor compounds and the block copolymer.

The precursor composition can be prepared according to the methods known in the art. For example, the precursor composition can be prepared by mixing, using conventional mixing means, the precursor compounds of the layered perovskite in an organic solvent or a mixture of organic solvents until a substantially homogeneous mixture is obtained.

The precursor composition can be formulated so that it has a desired viscosity, for example by appropriately selecting and dosing the organic solvents and precursors. In general, the rheological properties of the perovskite precursor composition can be easily tuned in order to allow its deposition through different techniques, such as for instance screen printing, inkjet printing, and roll to roll, etc, on small as well large area substrates.

As said, the present invention also refers to a thermochromic device and its manufacturing method. The manufacturing method comprises the following steps in sequence:
- providing a liquid precursor composition as described in the present disclosure;
- applying the liquid precursor composition on at least one surface of a substrate to obtain a coated substrate;
- heating the coated substrate to evaporate the solvent and form a thermochromic device.

The heat treatment of the precursor composition is carried out so that the organic solvent evaporates and a solid precipitate forms, which has a layered perovskite crystalline structure.

Preferably, the heat treatment is carried out at a temperature within the range 80 °C - 200 °C, either in air or under inert atmosphere. The heat treatment can be carried out using conventional means, such as hot plate, oven, etc.

Depending on the mass of the precursor composition and the thickness of the thermochromic material to be obtained, the heat treatment may have a duration of from 5 minutes to 1.5 hours, preferably from 10 minutes to 1 hour.

To prepare a thermochromic device, the precursor composition can be applied to a substrate using conventional methods such as those described above, i.e. techniques such as screen printing, inkjet printing, and roll to roll, etc, and then heat treated so that the layered perovskite forms directly to the substrate.

In one embodiment, the thickness of the layered perovskite present on the substrate of the reversible thermochromic article may vary within the range of from 100 nm to 500 µm, preferably 1 µm to 100 µm.

Depending on the specific use of the reversible thermochromic article, the substrate may be selected among a wide variety of materials. Non limiting examples of substrates onto which the thermochromic material of the present invention can be applied are: textile, glass, metal, elastomer, wood, silicon and plastic substrates.

The thermocromic material of the present invention can be used without substantial limitations for any type of application, where thermochromic materials are used in the state of the art.

Non limiting examples of application of the thermochormic material of the present invention are: smart coatings, inks, textiles, conductive elastomers, energy-saving materials, temperature-indicating materials, thermodiagnostic applications (e.g. medical thermography), optical and electro-optical applications, security marking of documents, solar cells, etc.

The invention will now be described in more detail with the following examples, which are given for purely illustrative purposes and which are not intended to limit the scope of the invention as defined by the annexed claims.

### EXAMPLES

### Materials

In the examples, the following compounds were used:
- lead(II) iodide (PbI₂), ultra-dry (99.999% metals basis) from Alfa Aesar;
- methylammonium iodide (MAI, CH₃NH₃I) and n-butylammonium iodide (BAI, C₄H₁₂IN) from Greatcell Solar;
- DMF, THF, DMSO solvents and block copolymer Pluronic^{®} L-61 (average Mₙ of about 2,000) from Sigma Aldrich.

All chemicals were used as received without any further purification.

### Colour transition temperature

The colour transition temperature for each material tested was determined by heating the printed material on a hot plate from 25°C to 150°C (100°C/min). The colour change temperature is the temperature at which the colour change starts to be perceived by a naked eye.

### UV-Visible spectroscopy

UV-Vis Transmittance spectra of the thermochromic materials in the wavelength range 300 - 800 nm were recorded using a Perkin Elmer UV/Vis/NIR spectrometer (Lambda 1050). For each tested material, spectra were recorded at 25°C and at the colour transition temperature of 70°C or 120°C.

### Example 1 - (BA)₂PbI₄ (n=1)

A thermochromic material according to the present invention and comprising a layered perovskite of formula (I) with n = 1 (i.e. (BA)₂PbI₄) was prepared as follows.

461 mg PbI₂ and 403 mg n-butylammonium iodide were dissolved in a mixture of DMF/DMSO solvents (0.8/0.2 mL respectively) at ambient temperature in air. The precursor solution was stirred at 70 °C for 1 hour.

25 µL of the precursor solution and 70 µL of Pluronic^{®} L-61 were then dissolved in 1 mL of THF and stirred at ambient temperature (25°C) for 1 hour, in air under a fume hood to obtain a precursor composition.

The precursor composition was then spin-coated (3.000 rpm for 30 sec) on a glass substrate of 2 cm x 2 cm and having a thickness of 1 mm.

The glass substrate coated with the precursor composition was then transferred on a hot plate and heated at 120°C for 10 minutes.

After the annealing treatment, the thermochromic material was colourless at the temperature of 25°C. Upon exposing the material to a temperature gradient of 100°C/minutes up to a maximum temperature of 125°C, a change in the colour of the material has been observed. The colour transition started at a temperature of about 70°C. At 70°C, the colour was yellow and did not change further up to the maximum temperature 125°C. The colour tranistion was completed within 10 seconds. Upon cooling from 70°C to 25°C, the material became again colourless. The low-temperature/high-temperature cycle has been repeated several times with reproducible results.

Figure 2(a) reports the UV-Vis transmittance spectra of the thermochromic material at 25°C and 70°C. ΔT(%)ₘₐₓ between the two curves is equal to 91.5% at about 510 nm.

### Example 2 - (BA)₂(MA)Pb₂I₇ (n=2)

Following the procedure described in Example 1, a thermochromic material according to the present invention and comprising a layered perovskite of formula (I) with n = 2 (i.e. (BA)₂(MA)Pb₂I₇), was prepared.

The precursor composition was prepared starting from a precuror solution obtained by dissolving 461 mg PbI₂, 80 mg methylammonium iodide and 201 mg n-butylammonium iodide in a mixture of DMF/DMSO solvents (0.8/0.2 mL respectively) at ambient temperature in air. The precursor solution was then mixed with the block copolymer Pluronic^{®} L-61 in THF in the same proportion as reported in Example 1 to obtain the precursor composition, which was then spin coated on a glass substrate as described in Example 1.

After the annealing treatment, the thermochromic material was colourless at the temperature of 25°C. Upon exposing the material to a temperature gradient of 100°C/minutes up to a maximum temperature of 125°C, a change in the colour of the material has been observed. The colour transition started at a temperature of about 120°C. At 120°C the colour was red and did not change further up to the maximum temperature of 125°C. The colour tranistion was completed within 10 seconds. Upon cooling from 120°C to 25°C, the material became again colourless. The low-temperature/high-temperature cycle has been repeated several times with reproducible results.

Figure 2(b) reports the UV-Vis transmittance spectra of the thermochromic material at 25°C and 120°C. □T(%)ₘₐₓ between the two curves is equal to 90.5% at about 577 nm.

### Example 3 - (BA)₂(MA)₂Pb₃I₁₀ (n=3)

Following the procedure described in Example 1, a thermochromic material according to the present invention and comprising a layered perovskite of formula (I) with n = 3 (i.e. (BA)₂(MA)₂Pb₃I₁₀), was prepared.

The precursor composition was prepared starting from a precursor solution obtained by dissolving 461 mg PbI₂, 105 mg methylammonium iodide and 133 mg n-butylammonium iodide in a mixture of DMF/DMSO solvents (0.8/0.2 mL respectively) at ambient temperature in air. The precursor solution was then mixed with the block copolymer Pluronic^{®} L-61 in THF in the same proportion as reported in Example 1 to obtain the precursor composition, which was then spin coated on a glass substrate as described in Example 1.

After the annealing treatment, the thermochromic material was colourless at the temperature of 25°C. Upon exposing the material to a temperature gradient of 100°C/minutes up to a maximum temperature of 125°C, a change in the colour of the material has been observed. The colour transition started at a temperature of about 120°C. At 120°C the colour was dark brown and did not change further up to the maximum temperature of 125°C. The colour tranistion was completed within 15 seconds. Upon cooling from 120°C to 25°C, the material became again colourless. The low-temperature/high-temperature cycle has been repeated several times with reproducible results.

Figure 2(c) reports the UV-Vis transmittance spectra of the thermochromic material at 25°C and 120°C. ΔT(%)ₘₐₓ between the two curves is equal to 91.8% at about 619 nm.

### Comparative Example - (BA)₂(MA)Pb₂I₇ (n=2) without poly(EO)/poly(PO) block copolymer

The precursor solution of Example 2 not containing the poly(ethylene oxide)/poly(propylene oxide) block copolymer was spin coated on a glass substrate as described in Example 1.

After the annealing treatment, the resulting layered perovskite material showed a red colour at the temperature of 25°C, which did not change upon exposing the material to a temperature gradient of 100°C/minutes up to a maximum temperature of 125°C.

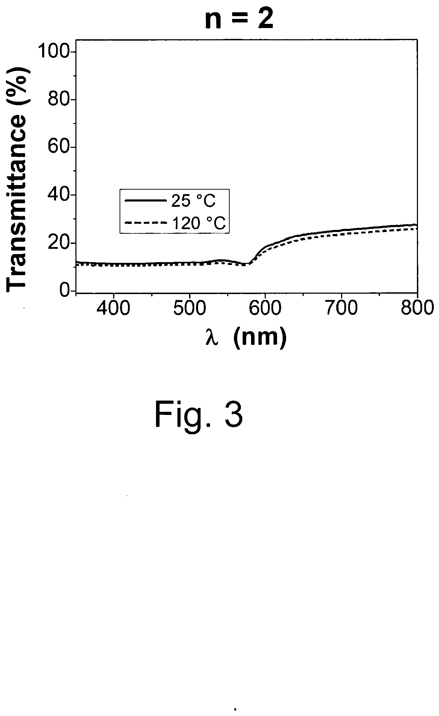

Figure 3 reports the UV-Vis transmittance spectra of the thermochromic material at 25°C and 120°C. ΔT(%)ₘₐₓ between the two curves is less than 1% at about 577 nm.

This example demonstrates that the thermochromic properties of the material of the present invention arise from the combination of the layered perovskite with the poly(ethylene oxide)/poly(propylene oxide) block copolymer.

## Claims

1. A thermochromic material comprising:
(i) at least one layered perovskite of formula (I)
A₂A'ₙ₋₁BₙX₃ₙ₊₁ (I),
or formula (II)
A"A'ₙ₋₁BₙX₃ₙ₊₁ (II),
wherein:
- A and A' are monovalent cations,
- A" is a divalent cation,
- A and A" are different from A',
- B is a divalent cation different from A, A' and A",
- X is a monovalent anion,
- n is an integer number equal to or higher than 1 and equal to or lower than 60;
(ii) at least one poly(ethylene oxide)/poly(propylene oxide) block copolymer.

2. The thermochromic material according to claim 1, wherein in the layered perovskite of formula (I) the cation A is a monovalent organic ammonium cation comprising one ammonium group bound to an organic moiety, wherein the organic moiety is preferably selected from: aliphatic, aromatic, heteroaromatic, heterocyclic or arylalkyl moiety, the organic moiety being possibly substituted with one or more from: halide, NO₂, NH₂, C₁-C₈ alkyl, amino (C₁-C₈)alkyl, ethoxy group and combinations thereof.

3. The thermochromic material according to claim 1, wherein in the layered perovskite of formula (II) the cation A" is a divalent organic ammonium cation comprising two ammonium groups bound to an organic moiety, wherein the organic moiety is preferably selected from: aliphatic, aromatic, heteroaromatic or heterocyclic, the organic moiety being possibly substituted with one or more from: halide, NO₂, NH₂, C₁-C₈ alkyl, amino (C₁-C₈)alkyl, ethoxy group and combinations thereof.

4. The thermochromic material according to any one of claims 1 to 3, wherein the cation A' is selected from: methylammonium, ethylammonium, formamidinium, acetamidinium, guanidinium, alkali metal cation and combinations thereof.

5. The thermochromic material according to any one of claims 1 to 4, wherein the cation B is selected from: Pb²⁺, Sn²⁺, Ge²⁺, divalent transition metal and combinations thereof.

6. The thermochromic material according to any one of claims 1 to 5, wherein:
in the layered perovskite of formula (I)
- A is C₃-C₂₀ alkylammonium ion, preferably C₄-C₈ alkylammonium ion;
- A' is C₁-C₂ alkylammonium ion, preferably methylammonium ion;
- B is a cation selected from Pb²⁺ or Sn²⁺;
- X is bromide or iodide;
in the layered perovskite of formula (II)
- A" is N,N-dimethyl-1,3-propanediammonium ion;
- A' is C₁-C₂ alkylammonium ion, preferably methylammonium ion;
- B is a cation selected from Pb²⁺ or Sn²⁺;
- X is chloride, bromide or iodide.

7. The thermochromic material according to any one of claims 1 to 6, wherein the at least one poly(ethylene oxide)/poly(propylene oxide) block copolymer has an ethylene oxide content within the range 5% - 50% by weight referred to the weight of the block copolymer, preferably within the range 10% - 40% by weight.

8. The thermochromic material according to any one of claims 1 to 7, wherein the least one poly(ethylene oxide)/poly(propylene oxide) block copolymer is present in an amount within the range of from 40% to 99% by weight referred to the weight of the thermochromic material, preferably within the range of from 70% to 85% by weight.

9. A liquid precursor composition for preparing a thermochromic material according to claim 1 comprising:
(i) a mixture of precursor compounds capable of reacting to form a layered perovskite of formula (I)
A₂A'ₙ₋₁BₙX₃ₙ₊₁ (I)
or formula (II)
A"A'ₙ₋₁BₙX₃ₙ₊₁ (II),
wherein:
- A and A' are monovalent cations,
- A" is a divalent cation,
- A and A" are different from A',
- B is a divalent cation different from A, A' and A",
- X is a monovalent anion,
- n is an integer number equal to or higher than 1 and equal to or lower than 60;
(ii) at least one poly(ethylene oxide)/poly(propylene oxide) block copolymer,
(iii) at least one organic solvent.

10. A thermochromic device comprising a substrate onto which a reversible thermochromic material according to claim 1 is applied.

11. A method for manufacturing a thermochromic device according to claim 10 comprising the steps of:
- providing a liquid precursor composition according to claim 9;
- applying the liquid precursor composition on at least one surface of a substrate to obtain a coated substrate;
- heating the coated substrate to evaporate the solvent and form a reversible thermochromic device.

12. Use of a composition comprising:
(i) at least one layered perovskite of formula (I)
A₂A'ₙ₋₁BₙX₃ₙ₊₁ (I)
or formula (II)
A"A'ₙ₋₁BₙX₃ₙ₊₁ (II),
wherein:
- A and A' are monovalent cations,
- A" is a divalent cation,
- A and A" are different from A',
- B is a divalent cation different from A, A' and A",
- X is a monovalent anion,
- n is an integer number equal to or higher than 1 and equal to or lower than 60;
(ii) at least one poly(ethylene oxide)/poly(propylene oxide) block copolymer
as thermochromic material.

## Patentansprüche

1. Thermochromes Material, umfassend:
(i) mindestens ein geschichtetes Perowskit der Formel (I)
A₂A'ₙ₋₁BₙX₃ₙ₊₁ (I)
oder Formel (II)
A"A'ₙ₋₁BₙX₃ₙ₊₁ (II),
wobei:
- A und A' einwertige Kationen sind,
- A" ein zweiwertiges Kation ist,
- A und A" verschieden von A' sind,
- B ein zweiwertiges Kation ist, das verschieden von A, A' und A" ist,
- X ist ein einwertiges Anion ist,
- n ist eine ganze Zahl größer oder gleich 1 und kleiner oder gleich 60 ist;
(ii) mindestens ein Poly(ethylenoxid)/Poly(propylenoxid)-Blockcopolymer.

2. Thermochromes Material nach Anspruch 1, wobei in dem geschichteten Perowskit der Formel (I) das Kation A ein einwertiges organisches Ammoniumkation ist, umfassend eine Ammoniumgruppe, die an einen organischen Rest gebunden ist, wobei der organische Rest vorzugsweise ausgewählt ist aus: einem aliphatischen, aromatischen, heteroaromatischen, heterocyclischen oder Arylalkylrest, wobei der organische Rest möglichst mit Halogenid und/oder NO₂ und/oder NH₂ und/oder C₁-C₈-Alkyl und/oder Amino(C₁-C₈)Alkyl und/oder einer Ethoxygruppe und Kombinationen davon substituiert ist.

3. Thermochromes Material nach Anspruch 1, wobei in dem geschichteten Perowskit der Formel (I) das Kation A" ein zweiwertiges organisches Ammoniumkation ist, umfassend zwei Ammoniumgruppen, die an einen organischen Rest gebunden sind, wobei der organische Rest vorzugsweise ausgewählt ist aus: aliphatisch, aromatisch, heteroaromatisch oder heterocyclisch, wobei der organische Rest möglichst mit Halogenid und/oder NO₂ und/oder NH₂ und/oder C₁-C₈-Alkyl und/oder Amino(C₁-C₈)Alkyl und/oder einer Ethoxygruppe und Kombinationen davon substituiert ist.

4. Thermochromes Material nach einem der Ansprüche 1 bis 3, wobei das Kation A' ausgewählt ist aus: Methylammonium, Ethylammonium, Formamidinium, Acetamidinium, Guanidinium, Alkalimetallkation und Kombinationen davon.

5. Thermochromes Material nach einem der Ansprüche 1 bis 4, wobei das Kation B ausgewählt ist aus: Pb²⁺, Sn²⁺, Ge²⁺, einem zweiwertigen Übergangsmetall und Kombinationen davon.

6. Thermochromes Material nach einem der Ansprüche 1 bis 5, wobei:
in dem geschichteten Perowskit der Formel (I)
- A ein C₃-C₂₀-Alkylammoniumion, vorzugsweise C₄-C₈-Alkylammoniumion ist;
- A' ein C₁-C₂-Alkylammoniumion, vorzugsweise Methylammoniumion ist;
- B ein Kation ist, ausgewählt aus Pb²⁺ oder Sn²⁺;
- X Bromid oder Jodid ist;
in dem geschichteten Perowskit der Formel (II)
- A" ein N,N-Dimethyl-1,3-Propandiammonium-Ion ist;
- A' ein C₁-C₂-Alkylammoniumion, vorzugsweise Methylammoniumion ist;
- B ein Kation ist, ausgewählt aus Pb²⁺ oder Sn²⁺;
- X Chlorid, Bromid oder Jodid ist.

7. Thermochromes Material nach einem der Ansprüche 1 bis 6, wobei das mindestens eine Poly(ethylenoxid)/Poly(propylenoxid)-Blockcopolymer einen Ethylenoxidgehalt im Bereich von 5 bis 50 Gew.-%, bezogen auf das Gewicht des Blockcopolymers, aufweist, vorzugsweise im Bereich von 10 bis 40 Gew.-%.

8. Thermochromes Material nach einem der Ansprüche 1 bis 7, wobei das mindestens eine Poly(ethylenoxid)/Poly(propylenoxid)-Blockcopolymer in einer Menge im Bereich von 40 bis 99 Gew.-%, bezogen auf das Gewicht des thermochromen Materials, vorhanden ist, vorzugsweise im Bereich von 70 bis 85 Gew.-%.

9. Flüssige Vorstufen-Zusammensetzung zur Herstellung eines thermochromen Materials nach Anspruch 1, umfassend:
(i) eine Mischung von Vorstufenverbindungen, die in der Lage sind zu reagieren, um ein geschichtetes Perowskit zu bilden der Formel (I)
A₂A'ₙ₋₁BₙX₃ₙ₊₁ (I)
oder Formel (II)
A"A'ₙ₋₁BₙX₃ₙ₊₁ (II),
wobei:
- A und A' einwertige Kationen sind,
- A" ein zweiwertiges Kation ist,
- A und A" verschieden von A' sind,
- B ein zweiwertiges Kation ist, das verschieden von A, A' und A" ist,
- X ist ein einwertiges Anion ist,
- n ist eine ganze Zahl größer oder gleich 1 und kleiner oder gleich 60 ist;
(ii) mindestens ein Poly(ethylenoxid)/Poly(propylenoxid)-Blockcopolymer,
(iii) mindestens ein organisches Lösungsmittel.

10. Thermochrome Vorrichtung, umfassend ein Substrat, auf das ein reversibles thermochromes Material nach Anspruch 1 aufgebracht ist.

11. Verfahren zur Herstellung einer thermochromen Vorrichtung nach Anspruch 10, umfassend die folgenden Schritte:
- Bereitstellen einer flüssigen Vorstufen-Zusammensetzung nach Anspruch 9;
- Auftragen der flüssigen Vorstufen-Zusammensetzung auf mindestens eine Oberfläche eines Substrats, um ein beschichtetes Substrat zu erhalten;
- Erhitzen des beschichteten Substrats, um das Lösungsmittel verdampfen zu lassen und eine reversible thermochrome Vorrichtung zu bilden.

12. Verwendung einer Zusammensetzung, umfassend:
(i) mindestens ein geschichtetes Perowskit der Formel (I)
A₂A'ₙ₋₁BₙX₃ₙ₊₁ (I)
oder Formel (II)
A"A'ₙ₋₁BₙX₃ₙ₊₁ (II),
wobei:
- A und A' einwertige Kationen sind,
- A" ein zweiwertiges Kation ist,
- A und A" verschieden von A' sind,
- B ein zweiwertiges Kation ist, das verschieden von A, A' und A" ist,
- X ist ein einwertiges Anion ist,
- n ist eine ganze Zahl größer oder gleich 1 und kleiner oder gleich 60 ist;
(ii) mindestens ein Poly(ethylenoxid)/Poly(propylenoxid)-Blockcopolymer als thermochromes Material.

## Revendications

1. Matériau thermochromique comprenant:
(i) au moins une pérovskite stratifiée de formule (I)
A₂A'ₙ₋₁BₙX₃ₙ₊₁ (I),
ou de formule (II)
A"A'ₙ₋₁BₙX₃ₙ₊₁ (II),
dans lequel:
- A et A' sont des cations monovalents,
- A" est un cation divalent,
- A et A" sont différents de A',
- B est un cation divalent différent de A, A' et A",
- X est un anion monovalent,
- n est un nombre entier supérieur ou égal à 1 et inférieur ou égal à 60;
(ii) au moins un copolymère à blocs poly(oxyde d'éthylène)/poly(oxyde de propylène).

2. Matériau thermochrome selon la revendication 1, dans lequel dans la pérovskite stratifiée de formule (I), le cation A est un cation ammonium organique monovalent comprenant un groupe ammonium lié à un groupement organique, dans lequel le groupement organique est de préférence choisi parmi les groupements: aliphatique, aromatique, hétéroaromatique, hétérocyclique ou arylalkyle, le groupement organique pouvant être substitué par un ou plusieurs des groupes: halogénure, NO₂, NH₂, C₁-C₈ alkyle, amino(C₁-C₈)alkyle, éthoxy et combinaisons de ces derniers.

3. Matériau thermochrome selon la revendication 1, dans lequel dans la pérovskite en couches de formule (II), le cation A" est un cation d'ammonium organique divalent comprenant deux groupes d'ammonium liés à un groupement organique, dans lequel le groupement organique est de préférence choisi parmi les groupements: aliphatique, aromatique, hétéroaromatique ou hétérocyclique, le groupement organique pouvant être substitué par un ou plusieurs des groupes: halogénure, NO₂, NH₂, C₁-C₈ alkyle, amino(C₁-C₈)alkyle, éthoxy et combinaisons de ces derniers.

4. Matériau thermochrome selon l'une des revendications 1 à 3, dans lequel le cation A' est choisi parmi: méthylammonium, éthylammonium, formamidinium, acétamidinium, guanidinium, cation de métal alcalin et des combinaisons de ces derniers.

5. Matériau thermochrome selon l'une des revendications 1 à 4, dans lequel le cation B est choisi parmi: Pb²⁺, Sn²⁺, Ge²⁺, métal de transition divalent et des combinaisons de ces derniers.

6. Matériau thermochrome selon l'une des revendications 1 à 5, dans lequel:
dans la pérovskite stratifiée de formule (I)
- A est un ion alkylammonium C₃-C₂₀, de préférence un ion alkylammonium C₄-C₈;
- A' est un ion alkylammonium C₁-C₂, de préférence un ion méthylammonium;
- B est un cation choisi parmi Pb²⁺ ou Sn²⁺ ;
- X est un bromure ou un iodure;
dans la pérovskite stratifiée de formule (II)
- A" est l'ion N,N-diméthyl-1,3-propanediammonium;
- A' est un ion alkylammonium C₁-C₂, de préférence un ion méthylammonium;
- B est un cation choisi parmi Pb²⁺ ou Sn²⁺ ;
- X est un chlorure, un bromure ou un iodure.

7. Matériau thermochrome selon l'une des revendications 1 à 6, dans lequel l'au moins un copolymère à blocs poly(oxyde d'éthylène)/poly(oxyde de propylène) a une teneur en oxyde d'éthylène comprise entre 5 % et 50 % en poids par rapport au poids du copolymère à blocs, de préférence entre 10 % et 40 % en poids.

8. Matériau thermochrome selon l'une des revendications 1 à 7, dans lequel le moins un copolymère à blocs poly(oxyde d'éthylène)/poly(oxyde de propylène) est présent dans une quantité comprise entre 40 % et 99 % en poids par rapport au poids du matériau thermochrome, de préférence dans une fourchette comprise entre 70 % et 85 % en poids.

9. Composition liquide de précurseur pour la préparation d'un matériau thermochromique selon la revendication 1, comprenant:
(i) un mélange de composés précurseurs capables de réagir pour former une pérovskite stratifiée de formule (I)
A₂A'ₙ₋₁BₙX₃ₙ₊₁ (I)
ou de formule (II)
A"A'ₙ₋₁BₙX₃ₙ₊₁ (II),
dans lequel:
- A et A' sont des cations monovalents,
- A" est un cation divalent,
- A et A" sont différents de A',
- B est un cation divalent différent de A, A' et A",
- X est un anion monovalent,
- n est un nombre entier supérieur ou égal à 1 et inférieur ou égal à 60;
(ii) au moins un copolymère à blocs poly(oxyde d'éthylène)/poly(oxyde de propylène),
(iii) au moins un solvant organique.

10. Dispositif thermochrome comprenant un substrat sur lequel est appliqué un matériau thermochrome réversible selon la revendication 1.

11. Procédé de fabrication d'un dispositif thermochromique selon la revendication 10, comprenant les étapes suivantes:
- fournir une composition de précurseur liquide selon la revendication 9;
- appliquer la composition de précurseur liquide sur au moins une surface d'un substrat pour obtenir un substrat revêtu;
- chauffer le substrat enduit pour évaporer le solvant et former un dispositif thermochromique réversible.

12. Utilisation d'une composition comprenant:
(i) au moins une pérovskite stratifiée de formule (I)
A₂A'ₙ₋₁BₙX₃ₙ₊₁ (I)
ou de formule (II)
A"A'ₙ₋₁BₙX₃ₙ₊₁ (II),
dans lequel:
- A et A' sont des cations monovalents,
- A" est un cation divalent,
- A et A" sont différents de A',
- B est un cation divalent différent de A, A' et A",
- X est un anion monovalent,
- n est un nombre entier supérieur ou égal à 1 et inférieur ou égal à 60;
(ii) au moins un copolymère à blocs poly(oxyde d'éthylène)/poly(oxyde de propylène) comme matériau thermochrome.
